# EUROPEAN PATENT SPECIFICATION

(11) **EP 0 471 914 B1**
(45) Date of publication and mention of the grant of the patent: **21.12.1994**
(21) Application number: 90830382.9
(22) Date of filing: 28.08.1990
(51) Int. Cl.: G11B 23/113, G11B 27/13

(54) **Process and apparatus for locating a predetermined point on a length of a tape partially wound on each of the two hubs of a cassette**
Verfahren und Vorrichtung zum Auffinden eines bestimmten Punktes auf der Länge eines auf beiden Spulen einer Kassette teilweise aufgewickelten Bandes
Procédé et appareil pour repérer un point donné sur la longueur d'une bande partiellement enroulée sur chacun des deux moyeux d'une cassette

(30) Priority: 06.08.1990 IT 2122590
(43) Date of publication of application: 26.02.1992
(73) Proprietor: TAPEMATIC S.p.A., I-20052 Monza (Milano) (IT)
(72) Inventor: Perego, Luciano, I-20050 Mezzago (Milano) (IT)
(74) Representative: Righetti, Giuseppe

(56) References cited:
- EP-A- 0 251 344
- DE-A- 2 425 856
- FR-A- 2 541 031
- US-A- 3 684 213
- US-A- 3 921 220

## Description

The present invention relates to a process and an apparatus for locating a predetermined point on the length of a ribbon-like insert associated with a magnetic tape cassette, said cassette comprising a first and a second hub onto each of them the ribbon-like insert is partly wound according to an undetermined amount.

The invention particularly applies to the field of the automatic machines for loading magnetic tapes into respective tape cassettes. In greater detail, in the described embodiment, the invention is directly applied to a machine of the above type and is exploited for suitably arranging a non-magnetizable ribbon-like insert commonly referred as to "leader tape" designed to define the end leaders of the loaded tape so that said leader tape may be cut into two pieces of same length upon the action of grasping and cutting means associated with the machine.

It is known that the loading of magnetic tapes into tape cassettes such as audio or video cassettes is carried out on automatic loading machines.

The empty cassettes coming to the loading machine accommodate a pair of hubs at their inside and the ends of a non-magnetizable ribbon-like insert commonly referred to as "leader tape" in this particular field, are secured to each of said hubs; said leader tape has a variable length depending upon the factory in which the cassette is produced. The leader tape may be either completely wound around one of the hubs or partly distributed between the two hubs in an undetermined manner.

The loading of the tape into the cassette is carried out close to a loading station provided in the loading machine. In this loading station the leader tape must be cut into two pieces of same length which will be afterwards spliced to the opposite ends of the magnetic tape. In greater detail, according to the known art, once the engagement of the cassette in the loading station has occurred, the leader tape is completely extracted therefrom upon the action of a grasping member mounted on a movable carriage along a guideway fastened to the machine. The leader tape extracted from the cassette and engaged by its ends to the cassette hubs is subsequently cut in register with its longitudinal center line by a cutter mechanism associated with said grasping member.

Afterwards, a splicing unit is operated which carries out the splicing of one end of the magnetic tape to one half of the leader tape after its being cut.

At this point a winding spindle operated by an electric motor drives in rotation the hub carrying the leader tape part to which the magnetic tape has been connected. In this manner the magnetic tape coming from a big supply reel or "pancake" is wound onto the hub according to a predetermined length. When the desired length of magnetic tape has been wound onto the hub, the tape is cut and spliced to the other half of the leader tape engaged on the other cassette hub.

As the winding spindle is operated again in rotation, the tape and the leader tape completely enter the cassette which will be subsequently ejected from the loading station.

The foregoing being premised, it is to be pointed out that the carriage carrying the grasping element must carry out a rectilinear stroke of important length equal to at least half the overall length of the leader tape, in order to perform its function in a proper manner. This requirement has been found to make the accomplishment of tape loading machines of reduced width almost impossible at the present state of the art.

In this connection it is to be noted that the same Applicant has recently developed a new automated tape loading machine having a plurality of loading modules which execute the tape loading into the cassettes by operating independently of one another. In this machine which has been the subject matter of an Italian Patent Application filed on the same date in the name of the same Applicant, it is of the greatest importance, for reduced bulkiness purposes, that each loading module should have a very reduced width, much lower than that of currently used loading machines. Under this situation, if it would be necessary to completely extract the leader tape from the cassette in order to find its center line, the planning of such a machine would involve so many complications that it would be almost impossible to propose it.

It has also been found that at the present state of the art the longer the leader tape is the more the point at which said leader tape is cut undesirably moves away from the center line thereof.

The document DE-A-24 25 856 discloses a device associated to a magnetic tape playing-recording apparatus in order to allow the location of a desired point on the length of the tape. Such a device includes means for completely winding the tape on the first hub of the cassette, means for storing a signal indicating a predetermined point on the tape, said signal being introduced by a key-board manually operable by the user, means for winding the tape onto the second cassette hub, means for counting the length of the tape which is being rewound onto the second cassete hub, and means for stopping the rewinding of the tape when this latter is rewound on the second hub according to a length which corresponds to the position of said predetermined point on the tape.

Such an apparatus allows to quickly find a desired point on the tape, if the position of such a point on the length of the tape itself is well known by the user, this apparatus, as well as a process actuated by the same, does not allow to locate any point the positioning of which depends on the total value of the length of the tape if such a total value is unknown.

The main object of the present invention is substantially to solve the above problems by providing a process and an apparatus adapted to suitably arrange the ribbon-like insert or leader tape within the cassette so that said leader tape may be cut exactly in register with its longitudinal center line after only a short length thereof has been extracted from the cassette, that is a length just sufficient to bring it close to the cutter and splicing mechanism designed to cut said leader tape and splice it to the magnetic tape.

However the technical task underlying the achievement of the above object is to ensure that the cutting of the leader tape may occur at the longitudinal center line thereof independently of the length of said leader tape and of how the leader tape is distributed between the two cassette hubs.

Another object of the invention is to provide an apparatus for putting the inventive process into practice which is adapted to be mounted either on a separate unit operating independently of the loading machine or directly on the loading machine, without too many structural complications relating to the machine itself being involved.

The foregoing and further objects which will become more apparent in the course of the present description are substantially attained by a process for locating a predetermined point on a length of a tape partially wound on each of the two hubs of a cassette, characterized in that it comprises the following steps: completely winding the tape onto the first cassette hub; completely rewinding the tape onto the second cassette hub while simultaneously counting the tape length; partially rewinding the tape onto the first hub while simultaneously counting the length of the rewound tape; interrupting the partial rewinding when a predetermined leght of the tape has been rewound onto the first hub.

Further features and advantages will be best understood from the detailed description of a preferred embodiment of a process and apparatus for locating a predetermined point on a length of a tape partially wound on each of the two hubs of a cassette in accordance with the present invention, given hereinafter by way of non-limiting example with reference to the accompanying drawing, in which:

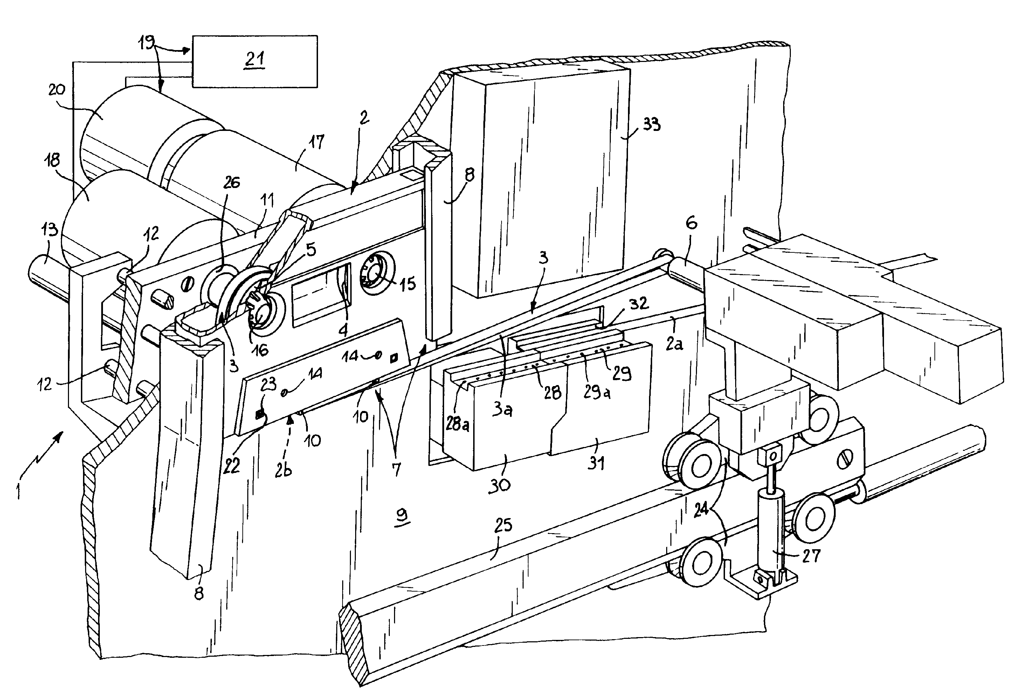

- Fig. 1 is a perspective view in split of an apparatus in accordance with the invention associated with a loading module provided in an automatic loading machine, in a situation in which a grasping element associated with said module has partly extracted the leader tape from the respective cassette.

Referring to the drawing, an apparatus for locating a predetermined point on a length of a tape partially wound on each of the two hubs of a cassette according to the invention has been generally identified by reference numeral 1.

Apparatus 1 is adapted to operate on a common tape cassette 2 which, before receiving the magnetic tape 2a to be loaded thereinto, is provided, at the inside thereof, with a leader tape 3 the opposite ends of which are respectively secured to first and second winding hubs identified at 4 and 5 respectively.

As better clarified in the following the operation of apparatus 1 enables a predetermined point on the length of the leader tape 3 to be disposed so that it faces the front opening 2b of the cassette 2, which will enable the leader tape itself to be engaged, at a predetermined point on its length, by an extraction pin 6 associated with an automatic machine for the tape cassette loading.

In the embodiment shown, the apparatus 1 is directly mounted on such a loading machine which is only partly shown and not further described since it is not of importance to the aims of the present invention. Reference is however made to the Italian Patent Application filed on the same date in the name of the same Applicant for any necessary explanation relating to said automatic machine.

Obviously the possibility that the apparatus in question may act as a separate unit independent of the loading machine must be contemplated as well.

The apparatus 1 is capable of locating a predetermined point on the length of the leader tape 3 by adopting a process comprising the following steps: completely winding the tape onto the first cassette hub; completely rewinding the tape onto the second cassette hub while simultaneouly counting the tape length; partially rewinding the tape onto the first hub while simultaneously counting the length of the rewound tape; interrupting the partial rewinding when a predetermined length of the tape has been rewound onto the first hub.

For this purpose, apparatus 1 comprises positioning means generally identified at 7, to hold the cassette 2 in a predetermined position. In the embodiment shown the positioning means 7 comprises a pair of feed guides 8 fastened to a front wall 9 of the loading machine and slidably engaging the cassette 2 at the opposite sides thereof. Associated with the feed guides 8 is one or more movable stop pegs 10 driven by one or more fluid-operated cylinders not shown as known per se from a rest condition in which they are disposed flush with the wall 9 to a working position in which, as shown in the figure, they protrude from the wall so as to stop the cassette from falling along the feed guides 8. The positioning means 7 further comprises in a manner known per se and therefore not shown in detail, a pair of centering points fastened to a plate 11 slidably mounted on slides 12 secured at the rear to the front wall 9. The plate 11 is movable, upon command of one or more fluid-operated actuators 13, from a rest position in which it is located backward relative to the front wall, to a working position in which, as shown in the figure, it is located close to the front wall 9 so that said centering points engage into respective locating holes 14 conventionally provided in the cassette 2.

Also mounted on plate 11 are first and second winding spindles 15, 16 which, when the plate is in its working position, engage inside the first and second hubs 4, 5 of the cassette 2. The first winding spindle 15 is operable in rotation upon command of one motor 17 or equivalent means fastened to the plate 11 so as to cause the winding of the leader tape 3 onto the first hub 4.

The second spindle 16, in turn, is operable in rotation upon command of a second motor 18 or equivalent means, in the opposite way relative to the rotation of the first winding spindle 15, so as to cause the winding of the leader tape 3 onto the second hub 5.

Counting means 19 is also provided and it is operatively connected to the winding spindles 15, 16 for counting the leader length when said leader tape 3 after being completely wound onto the first hub 4 upon command of the first winding spindle 15, is completely rewound onto the second hub 5 upon command of the second winding spindle 16. The counting means 19 is also arranged so as to constitute means for controlling the stoppage of the first winding spindle 15 when a predetermined amount of leader tape 3 has been rewound onto the first hub 4.

Preferably, the counting means 19 substantially comprises a common encoder 20 operatively connected to the first motor 17 and linked to an electronic control box 21, not described in detail as not of importance to the ends of the invention, which controls the starting and stopping of both motors 17 and 18.

Operation of the apparatus according to the invention described above mainly as regards structure, is as follows.

The cassette 2 is engaged, in a manner known per se and therefore not described, along the feed guides 8 and, by dropping, moves down along the latter until it meets the stop pegs 10, arranged at their working position. At this point the plate 11, first in a rest position, is brought to the working position upon command of the fluid-operated actuator 13. Thus the exact positioning of the cassette 2 is achieved by means of said centering points fastened to the plate 11 and engaging into the locating holes 14. Simultaneously, the winding spindles 15, 16 operatively engage into the respective hubs 4, 5.

Under this situation, the cassette is properly positioned and has the leader tape 3 partially wound on each of the two hubs 4, 5, the wound length on each hub being of indetermined amount.

Now the electronic control box 21 sets in motion the first motor 17 or equivalent means for controlling the winding of the leader tape 3 onto the first hub 4, through the first winding spindle 15.

When the leader tape 3 has been completely wound onto the first hub 4, the winding spindles 15, 16 are prevented from rotating, so that an increase in current absorption by the first motor 17 occurs. The control box 21 detects the variation in the current absorption by the first motor 17 and causes the deactivation of the latter while simultaneously operating the second motor 18 or equivalent means.

Under this situation, the operation of the second winding spindle 16 causes the complete rewinding of the leader tape 3 onto the second hub 5 and the simultaneous driving in rotation of the first winding spindle 15 together with the rotor of the first motor 17. During this step the encoder 20 and control box 21 or equivalent means carry out the counting of the leader tape length until, the rewinding being completed, the winding spindles 15, 16 are again prevented from rotating.

At this point the control box 21 causes the stoppage of the second motor 18 and the simultaneous operation of the first motor 17, while controlling, through the encoder 20, the length of the leader tape 3 which is being rewound onto the first hub 4.

The control box 21 or equivalent means also calculates, based on the length value detected during the operation of the second motor 18, how long the predetermined length of the leader tape 3 to be rewound onto the first hub 4 must be before causing the stoppage of the first motor 17. In the embodiment shown this length is determined by dividing the value of the overall leader tape length by two and adding a predetermined amount to the result thus obtained, the value of which amount depends on the relative positioning between the means carrying out the leader tape cutting, the cassette 2 and the extraction pin 6 at its farthermost position from the cassette 2.

At the end of the partial winding of the leader tape 3 onto the first hub 4, a short portion of the leader tape itself is extracted from the front opening 2b of the cassette 2, for example upon the action of a blowing nozzle 22 carried by the plate 11 and operating through another hole 23 conventionally present in the cassette 2.

The short portion of leader tape 3 coming out of the opening 2b forms a loop which is entered by the extraction pin 6 as a result of an axial displacement controlled by a known and conventional actuator. Still in known manner, the pin 6 mounted on a carriage 24 movable along a slide 25 is moved sideways relative to the cassette thereby causing a further extraction of the leader tape 3 involving a short portion of the total length thereof. During this step one of the winding spindles 15, 16 is prevented from rotating by an electromechanical clutch 26 so as to be sure that the amount of leader tape 3 extracted from the cassette 2 is univocally taken from one of the hubs 4, 5 only. In the example shown the electromechanical clutch 26 is associated with the second winding spindle 16. Alternatively, the motor 18 could be provided with an electromagnetic brake.

Once the leader extraction has been completed, the extraction pin 6 is lowered upon command of a further fluid-operated actuator 27, so that one portion 3a of the leader tape 3 and more precisely the one located downwardly, is laid into two rectilinear tracks 28, 29 formed on first and second support blocks 30 and 31 respectively, which are disposed in mutual alignment. The portion 3a of the leader tape 3 which is held in the tracks 29, 30 by a suction action produced through holes 28a, 29a opening into the track bottoms is subsequently cut by a cutter mechanism not shown as known per se, which is transversely movable between the blocks.

At this point the second block 31 is shifted relative to the first block 30 in order to bring a feed track 32 carried by the second block and designed to guide the tape 2a to be loaded into the cassette 2, into alignment with the track 28 of the first block 30. Then both blocks 30, 31 are simultaneously moved backward towards the front wall 9 to enable the execution of the splicing between the tape 2a and the leader tape portion 3a carried by the first block 28, upon the action of a splicing unit 33.

The splicing being carried out, the blocks 30, 31 are again moved away from the front wall 9 and the second motor 18 is operated again in order to start the winding of the tape 2a onto the second hub 5 of the cassette 2.

When the tape 2a continuously supplied by a reel not shown has been wound according to the desired amount, the second motor 18 is deactivated and the previously cited cutter mechanism cuts the tape 2a.

Then the second block 31 is moved so that it brings its respective track 29, still having in engagement the leader tape end portion 3a connected to the first hub 4, into alignment with the track 28 of the first block 30.

The blocks 30, 31 are simultaneously moved backward towards the front wall 9 to enable the splicing unit 33 to join the magnetic tape end 2a to the corresponding end of the leader tape portion 3a. At this point by a new operation of the second motor 18 the winding of the magnetic tape and the corresponding leader tape 3 stops.

The plate 11 with the respective winding spindles 15, 16 is brought back to its rest position and the stop pegs 10 are moved backward into the front wall 9 so that the cassette 2 can be ejected along the feed guides 8.

The invention attains the intended purposes.

It is to be pointed out in fact that by virtue of the process and apparatus in question it is no longer necessary to carry out the complete extraction of the leader tape 3 from the cassette 2, as it happened in the known art, in order to find the center line in the longitudinal extension of the leader tape itself. Being the leader tape 3 wound onto each hub 4, 5 according to a predetermined amount, it will be possible to greatly reduce the stroke of the extraction pin 6 the length of which will be right sufficient to enable the leader tape to be engaged on the blocks 30, 31.

The reduction of the extraction pin stroke will result in an important reduction of the bulkiness in width of the loading machine, or of the individual loading modules associated with a completely automated loading machine as the one described in the above cited patent application.

It will be also recognized that the apparatus and process in question can be advantageously installed and exploited as separate units operating independently of the loading machine.

## Claims

1. A process for locating a predetermined point on a length of a tape (3) partially wound on each of the two hubs of a cassette (2), comprising the following steps:
- completely winding the tape (3) onto the first cassette hub (4);
- completely rewinding the tape (3) onto the second cassette hub (5) while simultaneously counting the tape length;
- partially rewinding the tape (3) onto the first hub (4) while simultaneously counting the length of the rewound tape (3);
- interrupting the partial rewinding when a predetermined length of the tape (3) has been rewound onto the first hub (4).

2. A process according to claim 1, characterized in that after the interruption of the partial rewinding the following steps are carried out:
- stopping the rotation of one of the winding spindles (16);
- partially extracting the tape (3) from the cassette (2);
- cutting the tape (3) at a predetermined point.

3. An apparatus including a cassette for locating a predetermined point on a length of a tape (3) partially wound on each of the two hubs of said cassette, the apparatus comprising:
- positioning means (8, 10) for holding the cassette (2) according to a predetermined positioning;
- one winding spindle (15) operable in rotation and operatively engaging with the first cassette hub (4);
- a second winding spindle (16) operatively engaging with the second cassette hub (5) and operable in rotation in the opposite way relative to the rotation of the first winding spindle (15);
- means for completely winding the tape (3) onto the first cassette hub (4) by means of the first winding spindle (15)
- counting means (19) operatively connected to the winding spindles (15, 16), in order to count the length of the tape (3) which has been rewound onto the second hub (5) by means of the second winding spindle (16); characterized in that it further comprises:
- means for completely rewinding the tape (3) onto the second cassette hub (5) throught the second winding spindle (16) while simultaneously counting the total tape length;
- means for calculating a predetermined length of the tape, based on the value of said total length;
- means for partially rewinding the tape (3) onto the first hub (4) by means of the first winding spindle (15) while simultaneously counting the length of the rewound tape (3);
- means for interrupting the partial rewinding when said predetermined length of the tape (3) has been rewound onto the first hub (4).

4. An apparatus according to claim 3, characterized in that said positioning means comprise:
- a pair of substantially upright feed guides (8) fastened to support wall (9);
- at least a stop peg (10) movable from a rest position in which it is disposed flush with the support wall (9) to a working position in which it intercepts the descent of the cassette (2) along said feed guides (8).

5. An apparatus according to claim 3, characterized in that provision is made for a plate (11) slidably guided behind the support wall (9), carrying said winding spindles (15, 16) and movable from a rest position in which it is moved apart from said wall to a working position in which it is located close to said wall, and said spindles (15, 16) are operatively engaged in said hubs (4, 5).

6. An apparatus according to claim 3, characterized in that each of said winding spindles (15, 16) is operable in rotation by a respective motor (17, 18).

7. An apparatus according to claim 6, characterized in that said counting means (19) comprises at least an encoder (20) operatively connected to one of said motors (17) and an electronic control box (21) connected to the encoder (20) and the motors (17, 18) so as to control the operation of the first motor (17), the operation of the second motor (18), a new operation of the first motor (17) and the stoppage of the first motor (17) in succession, based on data detected by the encoder (20).

## Patentansprüche

1. Verfahren zum Auffinden eines bestimmten Punktes auf der Länge eines teilweise auf jeder der beiden Naben einer Kassette (2) aufgewickelten Bandes (3), mit den folgenden Arbeitsschritten:
- vollständige Aufwicklung des Bandes (3) auf der ersten Nabe (4) der Kassette;
- vollständige Wiederaufwicklung des Bandes (3) auf der zweiten Nabe (5) der Kassette, wobei gleichzeitig die Länge des Bandes gemessen wird;
- teilweise Wiederaufwicklung des Bandes (3) auf der ersten Nabe (49, wobei gleichzeitig die Länge des Bandes (3) gemessen wird, das wieder aufgewickelt wird;
- Unterbrechung der teilweisen Wiederaufwicklung, sobald eine vorbestimmte Länge des Bandes (3) auf der ersten Nabe (4) Glieder aufgewickelt wurde.

2. Verfahren nach Anspruch 1, dadurch gekennzeichnet, daß nach Unterbrechung der teilweisen Wiederaufwicklung folgende Arbeitsschritte vorgenommen werden:
- Unterbrechung der Drehung einer der Mitnahmestifte (16);
- teilweiser Auszug des Bandes (3) aus der Kassette (2);
- Abschneiden des Bandes (3) in einem bestimmten Punkt.

3. Vorrichtung, einbezogen eine Kassette, zur Auffindung eines bestimmten Punktes auf der Länge eines teilweise auf jeder der Naben der genannten Kassette aufgewickelten Bandes (3), wobei die Vorrichtung umfasst:
- Positioniermittel (8,10), um die Kassette (2) gemäß einer vorbestimmten Positionierung zu halten;
- einen ersten Mitnahmestift (15), der drehantreibbar ist und wirksam mit der ersten Nabe (4) der Kassette in Eingriff gebracht werden kann;
- einen zweiten Mitnahmestift (16), der wirksam mit der zweiten Nabe (5) der Kassette in Eingriff gebracht werden kann und in zur Drehung des ersten Mitnahmestiftes (15) entgegengesetzten Richtung drehbewegbar ist;
- Mittel zur vollständigen Aufwicklung des Bandes (3) auf der ersten Nabe (4) der Kassette durch den ersten Mitnahmestift (15);
- Zählmittel (19), die wirksam mit den Mitnahmestiften (15,16) verbunden sind, um die Länge des Bandes (3) zu messen, das auf der ersten Nabe (5) mittels des zweiten Mitnahmestiftes (16) wieder aufgewickelt wurde; dadurch gekennzeichnet, daß sie überdies umfasst:
- Mittel zur vollständigen Wiederaufwicklung des Bandes (3) auf der zweiten Nabe (5) der Kassette mittels des zweiten Mitnahmestiftes (16), wobei gleichzeitig die Gesamtlänge des Bandes gemessen wird;
- Mittel zur Berechnung einer vorbestimmten Länge des Bandes, aufgrund des Betrages der Gesamtlänge;
- Mittel zur teilweisen Wiederaufwicklung des Bandes (3) auf der ersten Nabe (4) mittels des ersten Mitnahmestiftes (15), wobei gleichzeitig die Länge des wiederaufgewickelten Bandes (3) gemessen wird;
- Mittel zur Unterbrechung der teilweisen Wiederaufwicklung, sobald die vorbestimmte Länge des Bandes (3) auf der ersten Nabe (4) wiederaufgewickelt wurde.

4. Vorrichtung nach Anspruch 3, dadurch gekennzeichnet, daß die Positioniermittel umfassen:
- ein Paar von im wesentlichen senkrechten Zuführführungen (8), die an einer Stützwand (9) befestigt sind ;
- zumindest einen Rastbolzen (10), der von einer Ruhestellung, in der er mit der Stützwand (9) ausgerichtet angeordnet ist, in einer Arbeitsstellung beweglich ist, in der er die Absenkung der Kassette (2) längs der Zuführführungen (8) unterbricht.

5. Vorrichtung nach Anspruch 3, dadurch gekennzeichnet, daß eine Platte (11) vorgesehen ist, die gleitbar hinter der Stützwand (9) geführt wird, die die erwähnten Mitnahmestifte (15,16) trägt und von einer Ruhestellung, in der sie von der Wand selbst beabstandet ist, in eine Arbeitsstellung beweglich ist, in der sie an dieser Wand anliegt, und wobei die Stifte (15,16) in den Naben (4,5) wirksam eingreifen.

6. Vorrichtung nach Anspruch 3, dadurch gekennzeichnet, daß jeder der Mitnahmestifte (15,16) durch einen jeweiligen Antrieb (17, 18) drehbewegbar ist.

7. Vorrichtung nach Anspruch 6, dadurch gekennzeichnet, daß die Zählmittel (19) mindestens einen Encoder (20) umfassen, der wirksam mit einem der Antriebe (17) verbunden ist, und eine elektronische Überwachungszentrale (21), die mit dem Encoder (20) und mit den Antrieben (17,18) derart verbunden ist, daß in Reihenfolge die Betätigung des ersten Antriebes (17), die Betätigung des zweiten Antriebes (18), eine neue Betätigung des ersten Antriebes (17) und die Stillsetzung des ersten Anriebes (17) aufgrund der durch den Encoder (20) erfassten Daten gesteuert werden.

## Revendications

1. Procédé pour repérer un point donné sur la longueur d'une bande (3) partiellement enroulée sur chacun des deux moyeux d'une cassette (2) comprenant les étapes suivantes:
- enroulement complet de la bande (3) sur le premier moyeu (4) de la cassette;
- réenroulement complet de la bande (3) sur le second moyeu (5) de la cassette pendant qu'on effectue simultanément le comptage de la longueur de la bande (3);
- réenroulement partiel de la bande (3) sur le premier moyeu (4) pendant qu'on effectue simultanément le comptage de la longueur de la bande (3) réenroulée;
- interruption du réenroulement partiel quand une quantité donnée de bande (3) a été réenroulée sur le premier moyeu (4).

2. Procédé selon la revendication 1, caractérisé en ce qu'on effectue, après l'interruption du réenroulement partiel, les étapes suivantes:
- arrêt de la rotation de l'un des goujons d 'entraînement (16);
- extraction partielle de la bande (3) de la cassette (2);
- découpage de la bande (3) à un point donné.

3. Appareil, incorporant une cassette, pour repérer un point donné sur la longueur d'une bande (3) partiellement enroulée sur chacun des deux moyeux de ladite cassette, l'appareil comprenant:
- des moyens de positionnement (8, 10) pour retenir la cassete (2) selon un positionnement prédéterminé;
- un premier goujon d'entraînement (15) susceptible d'actionnement en rotation et s'engageant de manière opératoire avec le premier moyeu (4) de la cassette;
- un second goujon d'entraînement (16) s'engageant de manière opératoire avec le second moyeu (5) de la cassette et susceptible d'actionnement en rotation dans le sens opposé par rapport à la rotation du premier goujon d'entraînement (15);
- des moyens pour enrouler complètement la bande (3) sur le premier moyeu (4) de la cassette au moyen du premier goujon d'entraînement (15);
- des moyens de comptage (19) reliés de manière opératoire aux goujons d'entraînement (15, 16) pour compter la longueur de la bande (3) qui a été réenroulée sur le second moyeu (5) au moyen du second goujon d'entraînement (16),
caractérisé en ce qu'il comporte en outre:
- des moyens pour réenrouler complètement la bande (3) sur le second moyeu (5) de la cassette au moyen du second goujon d'entraînement (16) pendant qu'on effectue simultanément le comptage de la longueur totale de la bande;
- des moyesn pour calculer une longueur donnée de la bande, sur la base de la valeur de ladite longueur totale;
- des moyens pour réenrouler partiellement la bande (3) sur le premier moyeu (4) au moyen du premier goujon d'entraînement (15) pendant qu'on effectue simultanément le comptage de la longueur de la bande (3) réenroulée;
- des moyens pour interrompre le réenroulement partiel quand ladite longueur donnée (3) de la bande a été réenroulée sur le premier moyeu (4).

4. Appareil selon la revendication 3, caractérisé en ce que lesdits moyens de positionnement comportent:
- une paire de guidages d'alimentation (8) sensiblement verticaux fixés à une paroi de support (9);
- au moins une cheville d'arrêt (10), mobile d'une position de repos dans laquelle elle est disposée au niveau de la paroi de support (9), à une position de travail dans laquelle elle intercepte la descente de la cassette le long desdits guidages d'alimentation (8).

5. Appareil selon la revendication 3, caractérisé en ce qu'on prévoit une plaque (11) guidée de manière coulissante derrière la paroi de support (9), portant lesdits goujons d'entraînement (15, 16) et mobile d'une position de repos dans laquelle elle est éloignée de ladite paroi, à une position de travail dans laquelle elle est située proche de ladite paroi et lesdits goujons d'entraînement sont engagés de manière opératoire dans lesdits moyeux (4, 5).

6. Appareil selon la revendication 3, caractérisé en ce que chacun desdits goujons d'entraînement (15, 16) est actionné en rotation par un respectif moteur (17, 18).

7. Appareil selon la revendication 6, caractérisé en ce que lesdits moyens de comptage (19) comportent au moins un codeur (20) relié de manière opératoire à l'un desdits moteurs (17) et un boîtier de commande électronique (21) relié au codeur (20) et aux moteurs (17, 18), de manière à commander en succession l'actionnement du premier moteur (17), l'actionnement du second moteur (18), un nouvel actionnement du premier moteur (17) et l'arrêt du premier moteur (17) sur la base des données détectées par le codeur (20).
